# FASCICULE DE BREVET EUROPEEN

(11) **EP 3 228 759 B1**
(45) Date de publication et mention de la délivrance du brevet: **20.02.2019**
(21) Numéro de dépôt: 17159856.8
(22) Date de dépôt: 08.03.2017
(51) Int. Cl.: E02F 3/96, E04G 23/08, B23D 31/00, E02F 9/22

(54) **OUTIL DE DEMOLITION ET ENGIN DE DEMOLITION EQUIPE D'UN TEL OUTIL**
ABBRUCHWERKZEUG UND ABBRUCHMASCHINE, DIE MIT EINEM SOLCHEN WERKZEUG AUSGESTATTET IST
DEMOLITION TOOL AND DEMOLITION MACHINE PROVIDED WITH SUCH A TOOL

(30) Priorité: 07.04.2016 FR 1653043
(43) Date de publication de la demande: 11.10.2017
(73) Titulaire: ARDEN EQUIPMENT, 08000 Charleville Mezieres (FR)
(72) Inventeur: PINGRET, Xavier, 08000 Charleville Mézières (FR)
(74) Mandataire: Godineau, Valérie

(56) Documents cités:
- JP-A- H0 972 109
- JP-A- H04 179 773
- JP-A- 2003 172 033
- JP-U- S63 111 551

## Description

### DOMAINE DE L'INVENTION

L'invention concerne un outil de démolition ainsi qu'un engin de démolition équipé d'un tel outil.

Elle concerne plus particulièrement un outil de démolition comprenant une première partie raccordable à un bras d'un engin de manutention et une deuxième partie rotative couplée à rotation à la première partie, cette deuxième partie comprenant un bâti, deux mâchoires dont au moins une est montée à pivotement sur ledit bâti et au moins un actionneur, chaque actionneur étant disposé entre une mâchoire pivotante et le bâti, pour le déplacement desdites mâchoires entre une position rapprochée l'une de l'autre et une position écartée l'une de l'autre, l'outil comprenant en outre un réseau de conduits de circulation de fluide sous pression s'étendant entre la première et la deuxième partie, ce réseau de conduits étant raccordé, via au moins un raccord tournant, à une arrivée d'un fluide sous pression équipant la première partie dudit outil, cette arrivée de fluide sous pression étant apte elle-même à être raccordée à une pompe équipant l'engin de manutention.

### ART ANTÉRIEUR

Un outil de démolition du type précité est décrit dans le document JP2003172033.

La pratique de captage des poussières générées par des travaux de démolition, pour les faire retomber au sol, se généralise depuis quelques années, notamment en zone urbaine, et ce, pour des questions de santé publique.

Pour permettre un tel captage des poussières, une pulvérisation d'un fluide sous pression, en général de l'eau, est pratiquée. Cette pulvérisation peut s'opérer à l'aide d'un canon qui propulse un brouillard d'eau dans une zone plus ou moins proche de l'outil. Toutefois, cette solution est extrêmement sensible au vent, énergivore, et entraîne une grande perte d'eau due à la distance entre la source de pulvérisation et l'outil.

Pour résoudre ces problèmes, il a été proposé d'installer des buses de pulvérisation sur l'outil de démolition. Toutefois, cette solution ne donne pas actuellement satisfaction, en raison de l'endommagement aisé des buses et des conduits exposés lors des travaux de démolition.

### BUT ET RÉSUMÉ

Un but de la présente invention est donc de proposer un outil de démolition dont la conception permet une protection des buses et des conduits, sans nuire aux possibilités d'ajustement des paramètres de projection de fluide.

À cet effet, l'invention a pour objet un outil de démolition comprenant une première partie raccordable à un bras d'un engin de manutention et une deuxième partie rotative couplée à rotation à la première partie, cette deuxième partie comprenant un bâti, deux mâchoires dont au moins une est montée à pivotement sur ledit bâti, et au moins un actionneur, chaque actionneur étant disposé entre une mâchoire pivotante et le bâti pour le déplacement desdites mâchoires entre une position rapprochée l'une de l'autre et une position écartée l'une de l'autre, l'outil comprenant en outre un réseau de conduits de circulation de fluide sous pression s'étendant entre la première et la deuxième partie, ce réseau de conduits étant raccordé via au moins un raccord tournant à une arrivée d'un fluide sous pression équipant la première partie dudit outil, cette arrivée de fluide sous pression étant apte, elle-même, à être raccordée à une pompe équipant l'engin de manutention, caractérisé en ce que la deuxième partie comprend en outre une pluralité de porte-buses aptes à être fixés sur le bâti de la deuxième partie, ces porte-buses comprenant chacun un passage traversant de mise en communication de l'intérieur du bâti avec l'extérieur, ce passage traversant étant taraudé sur au moins une partie de sa longueur, chaque porte-buse présentant, en configuration d'utilisation, à l'état fixé du porte-buse au bâti, l'une des extrémités de son passage traversant raccordée, de préférence par vissage, à l'un des conduits du réseau s'étendant au moins partiellement à l'intérieur du bâti et l'autre extrémité de son passage traversant munie d'une buse vissée à l'intérieur du passage traversant pour s'étendre en affleurement ou en retrait du débouché de ladite extrémité dudit passage, cette extrémité du passage traversant du porte-buse munie de la buse étant orientée en direction du sol à l'état dressé de l'outil de démolition reposant au sol par ses mâchoires pour permettre le rabat au sol des poussières aptes à être générées lors de l'utilisation de l'outil de démolition, le passage traversant d'au moins l'un des porte-buses étant coudé, les branches dudit passage traversant reliées entre elles par le coude formant entre elles un angle compris entre 95° et 135°, de préférence entre 110° et 125°.

La conception des porte-buses permet une protection des buses sans nuire à la possibilité de faire varier l'angle de projection du flux de fluide, notamment en modifiant simplement le tracé du passage traversant ou la position de fixation du porte-buse.

Le montage amovible des buses permet le choix de buses à jet plat, conique ou autres.

Le positionnement des buses dans des porte-buses fixés au bâti et des conduits à l'intérieur du bâti permet une protection de ces derniers, sans générer de flux de fluide susceptible d'arroser des pièces mécaniques sensibles de l'outil, notamment les pièces nécessaires à l'entraînement en rotation de la deuxième partie rotative de l'outil.

Selon un mode de réalisation, le bâti affecte la forme d'un corps allongé muni à l'une de ses extrémités, côté raccordement à la première partie, d'une platine et, à l'autre de ses extrémités, côté mâchoires, de la liaison pivot de raccordement d'au moins l'une des mâchoires pivotantes au bâti.

Selon un mode de réalisation, les conduits de circulation de fluide du réseau de conduits équipant la deuxième partie sont logés au moins partiellement dans le corps allongé et les porte-buses sont disposés sur ledit corps allongé, à l'extérieur dudit corps allongé.

Selon un mode de réalisation, au moins certains des porte-buses sont montés de manière amovible, de préférence par vissage, sur le bâti.

En variante, au moins certains des porte-buses sont montés de manière inamovible sur le bâti.

Selon un mode de réalisation, le réseau de conduits de circulation de fluide comprend, depuis l'arrivée de fluide sous pression équipant la première partie en direction des porte-buses, un conduit dit principal dont au moins une partie s'étend de manière coaxiale à l'axe de rotation de la deuxième partie, ce conduit principal se divisant à l'intérieur du bâti en conduits dits auxiliaires, lesdits conduits auxiliaires étant raccordables chacun à un porte-buse.

Selon un mode de réalisation, la branche du passage traversant, dont l'extrémité est raccordée à un conduit du réseau de conduits, forme avec l'axe de rotation de la deuxième partie un angle voisin de 90° à plus ou moins 20° près.

Selon un mode de réalisation, la branche du passage traversant du porte-buse apte à recevoir la buse est une branche épaulée délimitant, entre l'épaulement et le débouché de ladite branche, une section de passage élargie apte à faciliter la mise en place de la buse à l'intérieur de ladite branche.

L'invention a encore pour objet un engin de manutention dont le bras de manutention est raccordé à un outil de démolition du type précité.

### BRÈVE DESCRIPTION DES DESSINS

L'invention sera bien comprise à la lecture de la description suivante d'exemples de réalisation, en référence aux dessins annexés dans lesquels :
- La figure 1 représente une vue schématique d'un engin de manutention équipé d'un outil de démolition, conforme à l'invention.

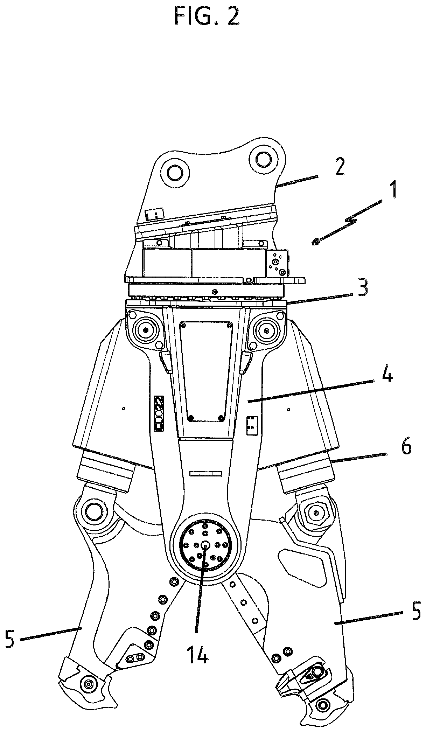

- La figure 2 représente une vue de face de l'outil de démolition.

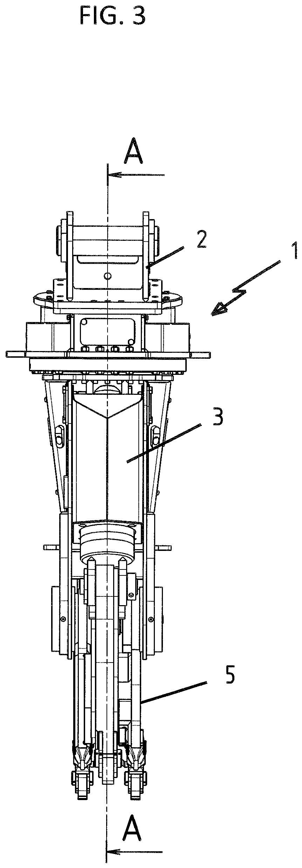

- La figure 3 représente une vue de côté de l'outil de démolition.

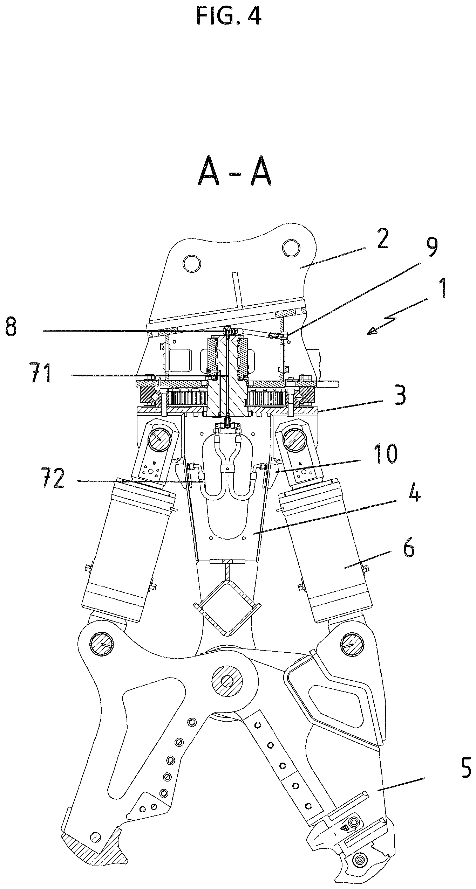

- La figure 4 représente une vue en coupe suivant AA de l'outil de démolition de la figure 3.
- La figure 5 représente une vue schématique du réseau de conduits et des porte-buses.
- La figure 6 représente, sous forme de deux vues en coupe, un porte-buse avec un angle variable d'un porte-buse à l'autre.
- La figure 7 représente une vue schématique partielle du bâti dans la zone de liaison d'un porte-buse à un conduit.
- La figure 8 représente une vue en perspective du bâti.

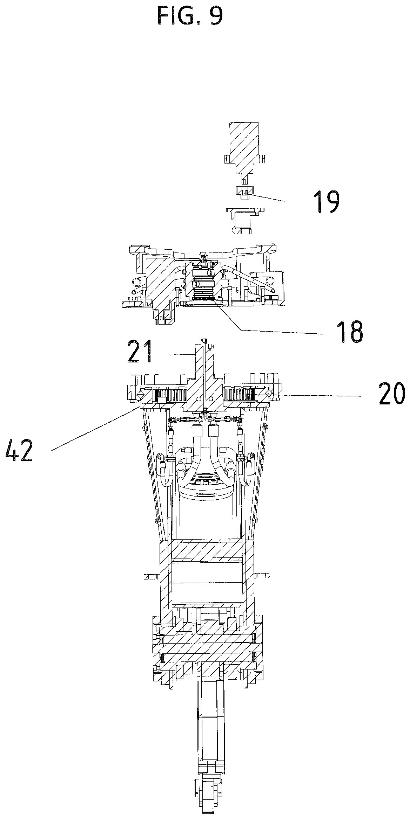

- La figure 9 représente une vue en coupe d'un outil de démolition, en position éclatée de certains éléments.

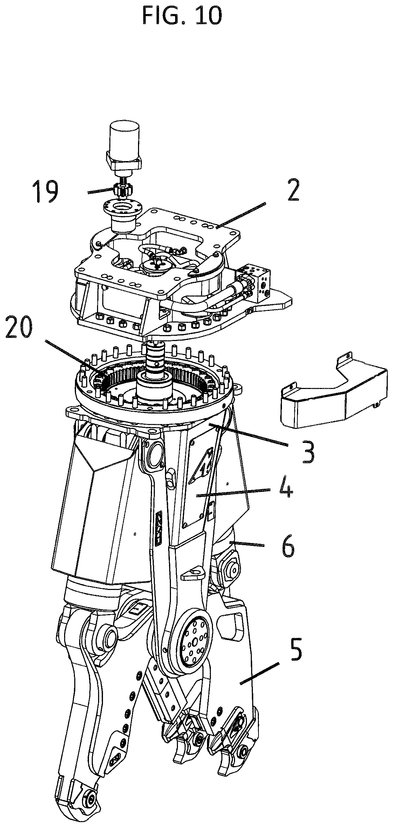

- La figure 10 représente une vue en perspective d'un outil de démolition, en position éclatée de certains éléments.

### DESCRIPTION DÉTAILLÉE

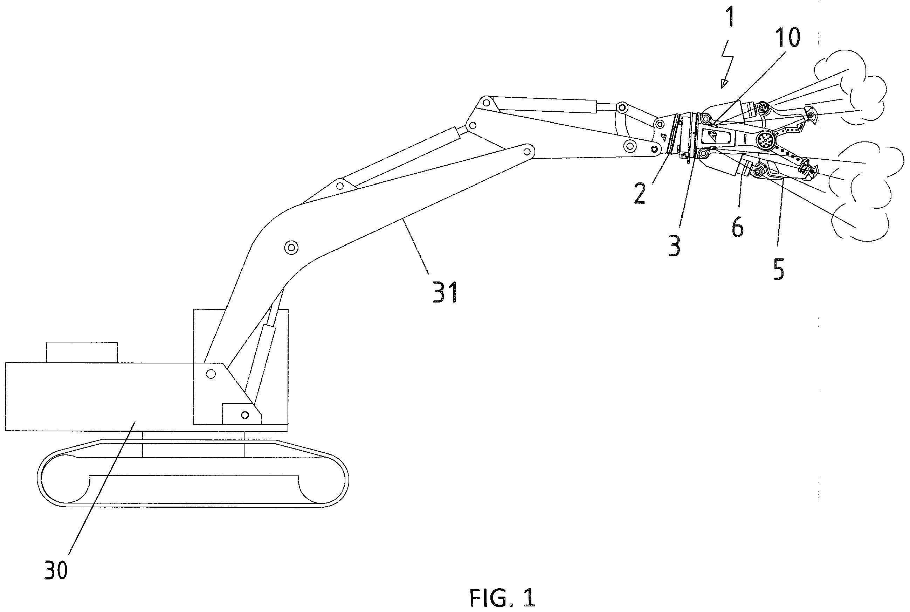

Comme mentionné ci-dessus, l'invention concerne un outil 1 de démolition, destiné à être fixé à l'extrémité d'un bras 31 d'un engin 30 de manutention, comme illustré à la figure 1.

Cet outil 1 de démolition comprend donc une première partie 2 raccordable au bras 31 et une deuxième partie 3 couplée et montée à rotation par rapport à ladite première partie 2.

La deuxième partie 3, qui constitue la partie active de l'outil pour les travaux de démolition, comprend donc un bâti 4, deux mâchoires 5 dont au moins une est montée à pivotement sur ledit bâti 4, et au moins un actionneur 6.

Chaque actionneur 6 est disposé entre une mâchoire 5 pivotante et le bâti 4 pour le déplacement desdites mâchoires 5 entre une position rapprochée l'une de l'autre et une position écartée l'une de l'autre.

Dans l'exemple représenté, la deuxième partie 3 comprend deux mâchoires 5 pivotantes et deux actionneurs 6 formés ici par des vérins hydrauliques entraînant chacun, à pivotement, une mâchoire 5.

Le bâti 4 affecte la forme d'un corps allongé 41, muni à l'une de ses extrémités, côté raccordement à la première partie 2, d'une platine 42 et à l'autre de ses extrémités, côté mâchoires, de la liaison 14 pivot de raccordement de chacune des mâchoires 5 pivotantes au bâti 4.

Les actionneurs 6 formés de vérins sont raccordés hydrauliquement à un circuit hydraulique embarqué sur la première partie 2 de l'outil, ce circuit étant lui-même relié au circuit hydraulique de l'engin. Ces actionneurs sont couplés, d'une part, à la platine 42, d'autre part à une mâchoire 5.

Les mâchoires 5 sont articulées sur ledit bâti 4 autour d'un axe pivot qui peut être commun. Les mâchoires 5 peuvent, de manière équivalente, être articulées autour de deux axes pivot distincts sur ledit bâti 4.

Les mâchoires 5 forment, au cours de leur déplacement entre une position rapprochée l'une de l'autre et une position écartée l'une de l'autre, une pince de démolition.

La platine 42 du bâti 4 est, sur sa face opposée à celle munie du corps 41 allongé, équipée d'un axe 21 pivot s'étendant centralement en saillie de ladite platine 42. Cet axe 21 pivot vient se loger dans un logement de la première partie 2, ce logement étant muni d'un joint 18 tournant.

La platine 42 porte encore, sur cette même face, une couronne 20 dentée à denture intérieure. Cette denture intérieure vient en prise avec un pignon 19 entraîné par un moteur porté par la première partie 2 de l'outil. Ainsi, la rotation du pignon 19 entraîne la rotation de la couronne 20, autour d'un axe coaxial à l'axe 21 pivot équipant la platine 42. La rotation de la couronne 20 fixée à la platine 42 entraîne la rotation de l'ensemble de la deuxième partie 3 de l'outil 1 de démolition.

L'outil 1 comprend en outre un réseau de conduits 71, 72 raccordé via au moins un raccord 8 tournant à une arrivée 9 d'un fluide sous pression équipant la première partie 2 dudit outil. Cette arrivée 9 de fluide sous pression est apte elle-même à être raccordée à une pompe non représentée, équipant l'engin 30 de manutention.

La deuxième partie 3 comprend quant à elle une pluralité de porte-buses 10 aptes à être fixés sur le bâti 4, en particulier sur le corps 41 allongé du bâti 4 de la deuxième partie 3.

Ainsi, le réseau de conduits 71, 72 de circulation de fluide comprend, depuis l'arrivée 9 de fluide sous pression équipant la première partie 2 en direction des porte-buses 10, un conduit 71 dit principal dont au moins une partie s'étend de manière coaxiale à l'axe de rotation de la deuxième partie 3, ce conduit 71 principal se divisant à l'intérieur du bâti en conduits 72 dits auxiliaires, lesdits conduits 72 auxiliaires étant raccordables chacun à un porte-buse 10.

Le conduit 71 principal s'étend donc sur une partie de sa longueur, coaxialement à l'axe pivot 21 équipant l'une des faces de la platine 42. Ce conduit 71 débouche ensuite à l'intérieur du corps 41 creux allongé constitutif du bâti, avant de se diviser en conduits 72 auxiliaires qui sont ici au nombre de quatre, chaque conduit 72 auxiliaire se raccordant à un porte-buse 10, généralement par vissage, à l'aide d'un raccord équipant l'extrémité dudit conduit 72.

Le conduit 71 et les conduits 72 sont donc parfaitement protégés, car ils sont logés au moins partiellement dans le corps 41 allongé, tandis que les porte-buses 10 sont disposés sur le corps 41 allongé à l'extérieur dudit corps 41 allongé.

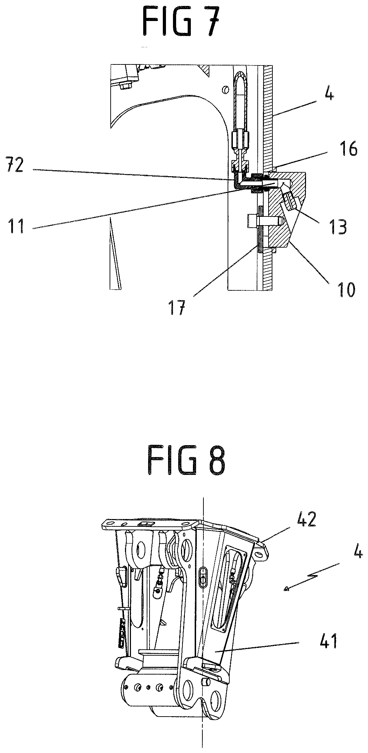

Ces porte-buses 10 peuvent être montés de manière amovible ou indémontable sur le bâti. Chaque porte-buse 10 vient se fixer à la paroi latérale de délimitation du corps 41 allongé, au niveau d'une ouverture de ladite paroi qu'il recouvre, comme illustré à la figure 7, où le porte-buse 10 est muni d'une collerette 16 qui vient s'appliquer sur le bord périphérique de l'ouverture ménagée dans le corps 41 allongé.

Le maintien en position du porte-buse 10 en applique sur la paroi latérale de délimitation du corps 41 allongé s'opère par vissage à l'aide d'une platine 17 de fixation positionnée à l'intérieur du corps 41 allongé, en applique contre la face interne dudit corps 41 allongé. Cette fixation par vissage peut permettre de faire varier la position finale du porte-buse 10. Une fixation indémontable par soudure du porte-buse à la paroi latérale périphérique du corps 41 allongé aurait également pu être envisagée.

On note que le corps 41 creux allongé muni au niveau de sa paroi latérale périphérique d'ouvertures sur lesquelles les porte-buses 10 viennent se positionner, peut comporter des ouvertures supplémentaires, comme illustré à la figure 8.

Chaque porte-buse 10 comprend un passage 11 traversant de mise en communication de l'intérieur du bâti 4 avec l'extérieur. Ce passage 11 traversant est taraudé sur au moins une partie de sa longueur. Le taraudage est représenté en 12 aux figures.

Chaque porte-buse 10 présente, en configuration d'utilisation, à l'état fixé du porte-buse 10 au bâti 4, une des extrémités de son passage 11 traversant représenté en 115 aux figures, raccordée par vissage à l'un des conduits 72 du réseau s'étendant au moins partiellement à l'intérieur du bâti 4, et l'autre extrémité 116 de son passage 11 traversant munie d'une buse 13 vissée à l'intérieur du passage 11 traversant, pour s'étendre en affleurement ou en retrait de ladite extrémité 116 dudit passage.

Cette extrémité 116 du passage 11 traversant du porte-buse 10 muni de la buse 13 est orientée en direction du sol à l'état dressé de l'outil 1 de démolition reposant au sol par ses mâchoires 5, pour permettre le rabat au sol des poussières aptes à être générées lors de l'utilisation de l'outil 1 de démolition.

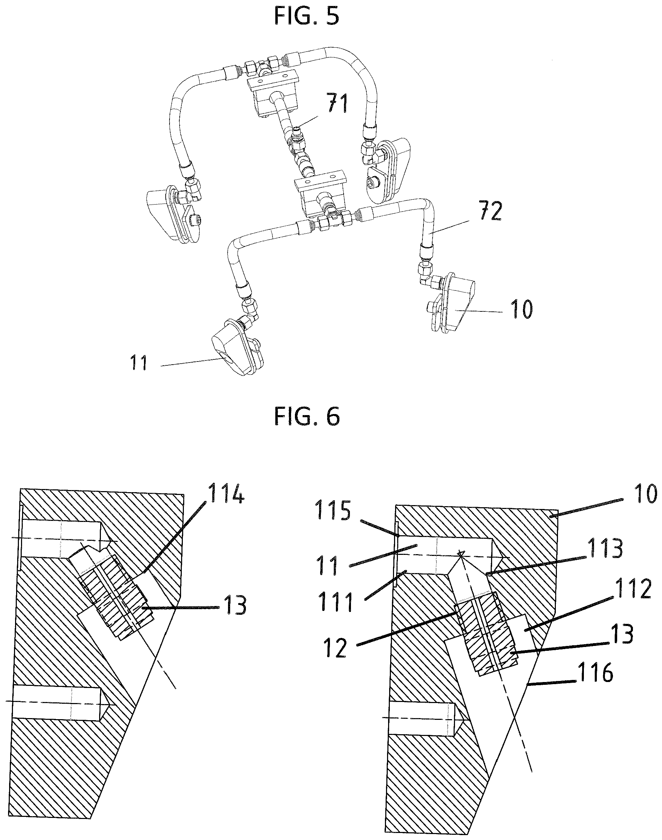

Dans l'exemple représenté, le passage 11 traversant des porte-buses 10 est coudé. Les branches 111, 112 dudit passage 11 traversant reliées entre elles par les coudes 113 forment entre elles un angle compris entre 95 et 135°. Ainsi, à la figure 6, l'angle du porte-buse de gauche est égal à 125°, et celui du porte-buse de droite à 110°. Il suffit donc de faire varier, par construction, l'angle formé entre les branches, pour modifier l'orientation du flux de fluide sans avoir à modifier d'autres éléments, et tout en conservant une protection de la buse associée. On note que la branche 111 du passage 11 traversant, dont l'extrémité est raccordée à un conduit 72 du réseau de conduits forme, avec l'axe de rotation de la deuxième partie 3, un angle voisin de 90° à plus ou moins 20° près.

Enfin, la branche 112 du passage 11 traversant du porte-buse 10 apte à recevoir la buse 13 est une branche épaulée, délimitant entre l'épaulement 114 et le débouché de ladite branche 112 une section de passage élargie, apte à faciliter la mise en place de la buse 13 à l'intérieur de ladite branche, en particulier, l'introduction d'une douille ou de doigts à l'intérieur dudit passage pour permettre un vissage de la buse 13. En effet, cette buse 13 est introduite dans le passage 11 traversant par la portion élargie du passage 11 traversant. Elle vient ensuite se visser dans ledit passage traversant, jusqu'à s'étendre en retrait ou en affleurement du débouché dudit passage 11 traversant à l'extérieur, pour éviter tout endommagement de la buse 13.

Le choix d'une buse 13 à jet plat ou conique permet également de faire varier les caractéristiques du flux de fluide projeté.

L'outil 1 de démolition tel que décrit ci-dessus permet donc, parallèlement à l'entraînement en rotation de la deuxième partie de l'outil et à l'actionnement des mâchoires, la pulvérisation d'un flux de fluide sous pression propre à rabattre la poussière en direction de la zone en cours de démolition.

## Revendications

1. Outil (1) de démolition comprenant une première partie (2) raccordable à un bras (31) d'un engin (30) de manutention et une deuxième partie (3) rotative couplée à rotation à la première partie (2), cette deuxième partie (3) comprenant un bâti (4), deux mâchoires (5) dont au moins une est montée à pivotement sur ledit bâti (4), et au moins un actionneur (6), chaque actionneur (6) étant disposé entre une mâchoire (5) pivotante et le bâti (4) pour le déplacement desdites mâchoires (5) entre une position rapprochée l'une de l'autre et une position écartée l'une de l'autre, l'outil (1) comprenant en outre un réseau de conduits (71, 72) de circulation de fluide sous pression s'étendant entre la première (2) et la deuxième partie (3), ce réseau de conduits (71, 72) étant raccordé via au moins un raccord (8) tournant à une arrivée (9) d'un fluide sous pression équipant la première partie (2) dudit outil (1), cette arrivée (9) de fluide sous pression étant apte, elle-même, à être raccordée à une pompe équipant l'engin (30) de manutention,
**caractérisé en ce que** la deuxième partie (3) comprend en outre une pluralité de porte-buses (10) aptes à être fixés sur le bâti (4) de la deuxième partie (3), ces porte-buses (10) comprenant chacun un passage (11) traversant de mise en communication de l'intérieur du bâti (4) avec l'extérieur, ce passage (11) traversant étant taraudé (12) sur au moins une partie de sa longueur, chaque porte-buse (10) présentant, en configuration d'utilisation, à l'état fixé du porte-buse (10) au bâti (4), l'une (115) des extrémités de son passage (11) traversant raccordée, de préférence par vissage, à l'un des conduits (72) du réseau s'étendant au moins partiellement à l'intérieur du bâti (4) et l'autre extrémité (116) de son passage (11) traversant munie d'une buse (13) vissée à l'intérieur du passage (11) traversant pour s'étendre en affleurement ou en retrait du débouché de ladite extrémité (116) dudit passage (11), cette extrémité (116) du passage (11) traversant du porte-buse (10) munie de la buse (13) étant orientée en direction du sol à l'état dressé de l'outil (1) de démolition reposant au sol par ses mâchoires (5) pour permettre le rabat au sol des poussières aptes à être générées lors de l'utilisation de l'outil (1) de démolition,
le passage (11) traversant d'au moins l'un des porte-buses (10) étant coudé, les branches (111, 112) dudit passage (11) traversant reliées entre elles par le coude (113) formant entre elles un angle compris entre 95° et 135°, de préférence entre 110° et 125°.

2. Outil (1) de démolition selon la revendication 1,
**caractérisé en ce que** le bâti (4) affecte la forme d'un corps (41) allongé muni à l'une de ses extrémités, côté raccordement à la première partie (2), d'une platine (42) et, à l'autre de ses extrémités, côté mâchoires, de la liaison (14) pivot de raccordement d'au moins l'une des mâchoires (5) pivotantes au bâti (4).

3. Outil (1) de démolition selon la revendication 2,
**caractérisé en ce que** les conduits (71, 72) de circulation de fluide du réseau de conduits équipant la deuxième partie (3) sont logés au moins partiellement dans le corps (41) allongé et **en ce que** les porte-buses (10) sont disposés sur ledit corps (41) allongé, à l'extérieur dudit corps (41) allongé.

4. Outil (1) de démolition selon l'une des revendications précédentes,
**caractérisé en ce qu'**au moins certains des porte-buses (10) sont montés de manière amovible, de préférence par vissage, sur le bâti (4).

5. Outil (1) de démolition selon l'une des revendications précédentes,
**caractérisé en ce que** le réseau de conduits (71, 72) de circulation de fluide comprend depuis l'arrivée (9) de fluide sous pression équipant la première partie (2) en direction des porte-buses (10), un conduit (71) dit principal dont au moins une partie s'étend de manière coaxiale à l'axe de rotation de la deuxième partie (3), ce conduit (71) principal se divisant à l'intérieur du bâti en conduits (72) dits auxiliaires, lesdits conduits (72) auxiliaires étant raccordables chacun à un porte-buse (10).

6. Outil (1) de démolition selon l'une des revendications 1 à 5,
**caractérisé en ce que** la branche (111) du passage (11) traversant, dont l'extrémité est raccordée à un conduit (72) du réseau de conduits, forme avec l'axe de rotation de la deuxième partie (3) un angle voisin de 90° à plus ou moins 20° près.

7. Outil (1) de démolition selon l'une des revendications 1 à 6,
**caractérisé en ce que** la branche (112) du passage (11) traversant du porte-buse (10) apte à recevoir la buse (13) est une branche épaulée délimitant entre l'épaulement (114) et le débouché de ladite branche (112) une section de passage élargie apte à faciliter la mise en place de la buse (13) à l'intérieur de ladite branche.

8. Engin (30) de manutention dont le bras (31) de manutention est raccordé à un outil (1) de démolition,
**caractérisé en ce que** l'outil (1) de démolition est conforme à l'une des revendications 1 à 7.

## Patentansprüche

1. Abbruchwerkzeug (1), umfassend einen ersten Teil (2), der an einem Arm (31) einer Betätigungseinrichtung (30) anschließbar ist, und einen rotierenden zweiten Teil (3), der rotierend an den ersten Teil (2) gekoppelt ist, wobei dieser zweite Teil (3) ein Gestell (4), zwei Backen (5), von denen mindestens eine schwenkend an dem Gestell (4) angebracht ist, und mindestens einen Aktuator (6) umfasst, wobei jeder Aktuator (6) zwischen einer schwenkenden Backe (5) und dem Gestell (4) für die Verlagerung der Backen (5) zwischen einer aneinander angenäherten Position und einer voneinander beabstandeten Position angeordnet ist, wobei das Werkzeug (1) ferner ein Leitungsnetz (71, 72) für die Zirkulation von Fluid unter Druck umfasst, das sich zwischen dem ersten (2) und dem zweiten Teil (3) erstreckt, wobei dieses Leitungsnetz (71, 72) über mindestens eine Drehverbindung (8) an eine Zufuhr (9) eines Fluids unter Druck angeschlossen ist, die den ersten Teil (2) des Werkzeugs (1) ausstattet, wobei diese Zufuhr (9) von Fluid unter Druck selbst imstande ist, an eine Pumpe angeschlossen zu sein, die die Betätigungseinrichtung (30) ausstattet,
**dadurch gekennzeichnet, dass** der zweite Teil (3) ferner eine Vielzahl von Düsenträgern (10) umfasst, die imstande sind, auf dem Gestell (4) des zweiten Teils (3) befestigt zu sein, wobei diese Düsenträger (10) jeweils einen durchgängigen Durchgang (11) für das Inkommunikationversetzen des Inneren des Gestell (4) mit außerhalb umfasst, wobei dieser durchgängige Durchgang (11) über mindestens einen Teil seiner Länge mit einem Gewinde (12) versehen ist, wobei jeder Düsenträger (10) in Benutzungskonfiguration im befestigten Zustand des Düsenträgers (10) am Gestell (4) das eine (115) der Enden seines durchgängigen Durchgangs (11) aufweist, das vorzugsweise durch Schrauben an eine der Leitungen (72) des Netzes angeschlossen ist, die sich mindestens teilweise im Inneren des Gestells (4) erstreckt, und das andere Ende (116) seines durchgängigen Durchgangs (11) an eine Düse (13), die im Inneren des durchgängigen Durchgangs (11) verschraubt ist, um sich bündig oder zurückgesetzt von der Mündung des Endes (116) des Durchgangs (11) zu erstrecken, wobei dieses Ende (116) des durchgängigen Durchgangs (11) des Düsenträgers (10), das mit der Düse (13) ausgestattet ist, im durch seine Backen (5) aufgerichteten Zustand des auf dem Boden ruhenden Abbruchwerkzeugs (1) in Richtung des Bodens ausgerichtet ist, um das Ablenken zum Boden der Stäube zu erlauben, die imstande sind, bei der Verwendung des Abbruchwerkzeugs (1) zu entstehen,
wobei der durchgängige Durchgang (11) mindestens eines der Düsenträger (10) gekrümmt ist, wobei die Abzweigungen (111, 112) des durchgängigen Durchgangs (11) untereinander durch die Krümmung (113) verbunden sind, so dass sie untereinander einen Winkel bilden, der zwischen 95° und 135°, vorzugsweise zwischen 110° und 125°, liegt.

2. Abbruchwerkzeug (1) nach Anspruch 1,
**dadurch gekennzeichnet, dass** das Gestell (4) die Form eines länglichen Körpers (41) hat, der an einem seiner Enden anschlussseitig an den ersten Teil (2) mit einer Platte (42) und an dem anderen seiner Enden backenseitig mit der schwenkenden Anschlussverbindung (14) mindestens einer der schwenkenden Backen (5) am Gestell (4) ausgerüstet ist.

3. Abbruchwerkzeug (1) nach Anspruch 2,
**dadurch gekennzeichnet, dass** die Fluidzirkulationsleitungen (71, 72) des Leitungsnetzes, die den zweiten Teil (3) ausrüsten, mindestens teilweise in dem länglichen Körper (41) untergebracht sind und dass die Düsenträger (10) auf dem länglichen Körper (41) außerhalb des länglichen Körpers (41) angeordnet sind.

4. Abbruchwerkzeug (1) nach einem der vorangehenden Ansprüche,
**dadurch gekennzeichnet, dass** mindestens einige der Düsenträger (10) lösbar, vorzugsweise durch Schrauben, auf dem Gestell (4) angebracht sind.

5. Abbruchwerkzeug (1) nach einem der vorangehenden Ansprüche,
**dadurch gekennzeichnet, dass** das Leitungsnetz (71, 72) für die Zirkulation von Fluid ab der Zufuhr (9) von Fluid unter Druck, das den ersten Teil (2) in Richtung der Düsenträger (10) ausstattet, eine Hauptleitung (71) umfasst, von der sich mindestens ein Teil koaxial zur Rotationsachse des zweiten Teils (3) erstreckt, wobei sich diese Hauptleitung (71) im Inneren des Gestells in Hilfsleitungen (72) unterteilt, wobei die Hilfsleitungen (72) jeweils an einen Düsenträger (10) anschließbar sind.

6. Abbruchwerkzeug (1) nach einem der Ansprüche 1 bis 5,
**dadurch gekennzeichnet, dass** die Abzweigung (111) des durchgängigen Durchgangs (11), deren Ende an eine Leitung (72) des Leitungsnetzes angeschlossen ist, mit der Rotationsachse des zweiten Teils (3) einen Winkel von zirka 90° bei ungefähr mehr oder weniger 20° bildet.

7. Abbruchwerkzeug (1) nach einem der Ansprüche 1 bis 7,
**dadurch gekennzeichnet, dass** die Abzweigung (112) des durchgängigen Durchgangs (11) des Düsenträgers (10), die imstande ist, die Düse (13) aufzunehmen, eine Abzweigung mit Absatz ist, die zwischen dem Absatz (114) und der Mündung der Abzweigung (112) einen erweiterten Durchgangsquerschnitt begrenzt, der imstande ist, die Platzierung der Düse (13) in das Innere der Abzweigung zu erleichtern.

8. Betätigungseinrichtung (30), dessen Betätigungsarm (31) mit einem Abbruchwerkzeug (1) verbunden ist,
**dadurch gekennzeichnet, dass** das Abbruchwerkzeug (1) nach einem der Ansprüche 1 bis 7 ist.

## Claims

1. Demolition tool (1) comprising a first portion (2) connectable to an arm (31) of a handling machine (30) and a second portion (3) rotatably coupled to the first portion (2), wherein the second portion (3) comprises a frame (4), two jaws (5), one of which at least is pivotally mounted on the frame (4), and at least one actuator (6), wherein the, or each, actuator (6) is disposed between a pivoting jaw (5) and the frame (4) for the displacement of the jaws (5) between a position close to each other and a position spaced apart from each other, wherein the tool (1) further comprises a network of ducts (71, 72) for circulating fluid under pressure and extending between the first portion (2) and the second portion (3), wherein this network of ducts (71, 72) is connected via at least one coupling (8) rotating at an inlet (9) of a fluid under pressure equipping the first portion (2) of the tool (1), wherein this inlet (9) of fluid under pressure is itself able to be connected to a pump equipping the handling machine (30), **characterized in that** the second portion (3) further comprises a plurality of nozzle holders (10) that are designed to be fixed on the frame (4) of the second portion (3), wherein these nozzle holders (10) each comprise a passage (11) forming communication between the interior of the frame (4) and the outside, wherein this passage (11) is tapped (12) over at least a portion of its length, and wherein each nozzle holder (10) has, in its configuration of use and in the fixed state of the nozzle holder (10) on the frame (4), one (115) of the ends of its through passage (11) connected, preferably by screwing, to one of the ducts (72) of the network extending at least partially inside the frame (4), while the other end (116) of its through passage (11) is provided with a nozzle (13) that is screwed inside the through passage (11) in order to be flush or recessed with respect to the outlet of the end (116) of the passage (11), wherein this end (116) of the passage (11) traverses the nozzle holder (10) provided with the nozzle (13) that is oriented towards the ground in the prepared state of the demolition tool (1) that rests on the ground via its jaws (5) to allow it to avoid the ground dust that may be generated during use of the demolition tool (1), wherein the passage (11) traversing at least one of the nozzle holders (10) is bent, while the branches (111, 112) of the through passage (11) that are interconnected by the bend (113) form an angle of between 95° and 135°, preferably between 110° and 125° between them.

2. Demolition tool (1) according to claim 1, **characterized in that** the frame (4) has the shape of an elongated body (41) provided with a plate (42) at one of its ends on the side of the connection to the first portion (2), and, the connection pivot of at least one of the jaws (5) pivoting on the frame (4) at the other of its ends on the jaw side of the connection (14).

3. Demolition tool (1) according to claim 2, **characterized in that** the ducts (71, 72) for fluid circulation in the network of ducts equipping the second portion (3) are housed at least partially in the body (41) and that the nozzle holders (10) are disposed on the elongated body (41), outside the elongated body (41).

4. Demolition tool (1) according to one of the preceding claims, **characterized in that** at least some of the nozzle holders (10) are removably mounted on the frame (4), preferably by screwing.

5. Demolition tool (1) according to one of the preceding claims, **characterized in that** the network of ducts (71, 72) for fluid circulation comprises a duct (71) from the pressurized fluid inlet (9) equipping the first portion (2) in the direction of the nozzle holder (10) and referred to as the main duct, of which at least a portion extends coaxially with the axis of rotation of the second portion (3), wherein this main duct (71) divides inside the frame into auxiliary ducts (72), wherein the auxiliary ducts (72) are each connectable to a nozzle holder (10).

6. Demolition tool (1) according to one of the claims 1 to 5, **characterized in that** the branch (111) of the through passage (11) the end of which is connected to a duct (72) of the network of ducts, forms an angle close to 90° to plus or minus 20° with the axis of rotation of the second portion (3).

7. Demolition tool (1) according to one of the claims 1 to 6, **characterized in that** the branch (112) of the through passage (11) of the holder (10) designed to receive the nozzle (13) is a shouldered branch delimiting an enlarged passage section that is designed to facilitate the introduction of the nozzle (13) within the branch between the shoulder (114) and the outlet of the branch (112).

8. Handling machine (30) whose handling arm (31) is connected to a demolition tool (1), **characterized in that** the demolition tool (1) is in accordance with one of the claims 1 to 7.
